# EUROPEAN PATENT SPECIFICATION

(11) **EP 2 108 485 B1**
(45) Date of publication and mention of the grant of the patent: **08.02.2012**
(21) Application number: 09155398.2
(22) Date of filing: 17.03.2009
(51) Int. Cl.: B25G 1/10, B23D 71/04

(54) **Hand tool having grinding capabilities**
Handwerkzeug mit Schleiffunktionen
Outil manuel comportant des capacités d'affûtage

(30) Priority: 11.04.2008 TW 97113110
(43) Date of publication of application: 14.10.2009
(73) Proprietor: Tsai, Chiung-Chang, Kaohsiung City Taiwan (CN)
(72) Inventor: Tsai, Chiung-Chang, Kaohsiung City Taiwan (CN)
(74) Representative: Lang, Christian

(56) References cited:
- JP-U- 60 004 321
- US-A- 2 980 996
- US-A- 5 475 894

## Description

### FIELD OF THE INVENTION

The present invention relates to a hand tool having grinding capabilities, especially to a hand tool having grinding surfaces with abrasive grains or a plurality fine protrusions provided on a handle, connecting portion or tool head, so that the user can grind the sharp edge of articles straightly by the hand tool.

### BACKGROUND OF THE INVENTION

A conventional handle of a hand tool such as US patent No. 4,969,231 , whose handle has a screw drill at one end, and outer periphery of the handle defined stripes thereon when formed by injecting plastic for increasing the friction between the handle and the hand of users. Aforementioned conventional handle with strips has the following disadvantage : The handle is easily stained with oil (such as engine oil and lubricating oil) when it works, so that the stripes will substantially decrease the friction, and the user can not drive the hand tool exactly. Also the stripes of the conventional handle have not the function of grinding a sharp edge of articles or workpieces.

Another conventional hand tool such as US patent No. 5,475,894 , whose handgrip has a screw drill at one end, and a layer of friction-enhancing particles bonded to the surface of the handgrip body so as to prevent a slippage between the handgrip and the hand of user. The purpose and function of aforementioned conventional handgrip is prevention of slippage but not for grinding articles. Also the conventional handgrip has not a plurality of grinding surface with different average diameter of particles from each other, so that it can not grind the articles to have many kind of fines degree according to the user's wishes. Further, the layer of the conventional handgrip can not be dismounted from the body for easily replacing a new one after bonded.

Further, in the prior arts, there are many kinds of grinding stone or grinding wheel made of abrasive grains (such as diamond grains or CBN grains), such as US patents No. 6,533,650, 4,536,195 and 6,299,522. Those conventional grinding stone or grinding wheel is used to mount on a grinding device but not on a hand tool (such as a screw driver or a wrench). During the user working with a hand tool, he can not grind the articles straightly by the hand tool when he find out the edge of the articles are sharp or the articles are not easily driven, and he must inconveniently look for a grinding device to grind the sharp edge of the articles.

US-2 980 996-A discloses a hand tool according to the preamble of claim 1.

### SUMMARY OF THE INVENTION

A first object of the present invention is to provide a hand tool having the capability of grinding articles. The user can grind the articles when working and finding out that the edge of the articles are so sharp as to harm human body or finding out that the articles are not easily driven. For the aforementioned purpose, the hand tool of the present invention is designed to comprise a plurality of grinding surface provided on a handle body so as to have a grinding capability.

A second object of the present invention is to provide a hand tool having the capability of grinding articles to be in different fine degrees. For the aforementioned purpose, the handle of the present invention is designed to comprise a plurality of grinding surfaces provided on a handle body, each grinding surface is constructed by a plurality of fine protrusions, the average diameter of the fine protrusions of each grinding surfaces is different from the other.

A third object of the present invention is to provide a hand tool having the capability of grinding articles and easily replacing a new grinding member. For the aforementioned purpose, the hand tool of the present invention is designed to comprise a handle body having slots, and grinding members having grinding surface, the slot has one end closed and the other end with a opening, the grinding member is inserted from the opening and mounted in the slot, the body is connected to a cover to close the second opening.

### BRIEF DESCRIPTION OF THE DRAWINGS

FIG 1 is 3D exploded view of first embodiment of the present invention;
FIG. 2 is a perspective view of first embodiment of the present invention;
FIG 3 is a top view of first embodiment of the present invention;
FIG 4 is a cross-sectional view, taken along line A-A in FIG 3;
FIG 5 is 3D exploded view of second embodiment of the present invention;
FIG 6 is a top view of assembled second embodiment of the present invention;
FIG 7 is a cross-sectional view, taken along line B-B in FIG. 6;
FIG 8 is a 3D exploded view of 3rd embodiment of the present invention;
FIG. 9 is a 3D exploded view of an example of a tool not forming part of the invention;
FIG 10 is a perspective view of 5th embodiment of the present invention;
FIG 11 is a perspective view of 6th embodiment of the present invention;
FIG 12 is a perspective view of 7th embodiment of the present invention;
FIG 13 is a 3D exploded view of an example of a tool not forming part of the invention;
FIG 14 is a 3D exploded view of an example of a tool not forming part of the invention;
FIG 15 is a top view of assembled tool from FIG. 14;
FIG. 16 is a cross-sectional view, taken along line C-C in FIG. 15;
FIG. 17 is a cross-sectional view, taken along line D-D in FIG. 15;
FIG. 18 is a cross-sectional view, taken along line E-E in FIG. 15;
FIG. 19 is a 3D exploded view of an example of a tool not forming part of the invention; and
FIG. 20 is a 3D exploded view of an example of a tool not forming part of the invention.

### DETAILED DESCRIPTION

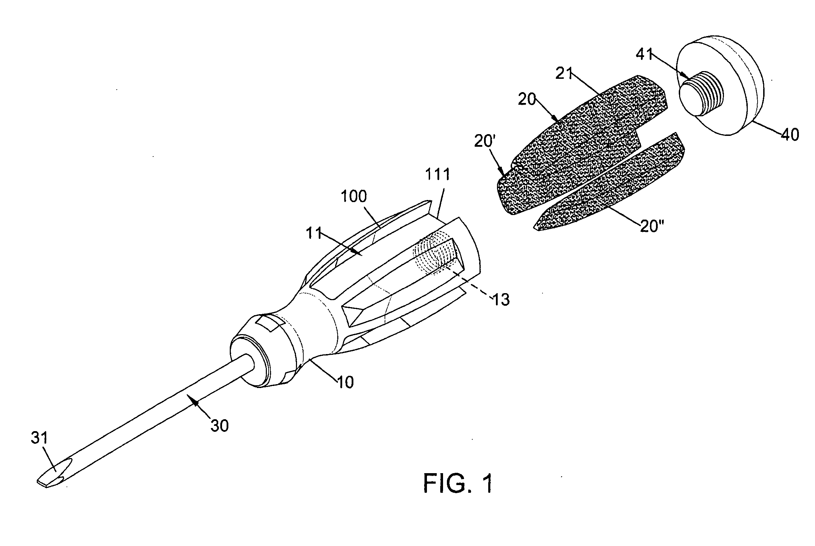

Referring to Fig. 1, the hand tool having grinding capabilities of the present invention, which has a basic structure in this embodiment comprising:
a handle body 10 provided for holding by a user's hand, and the handle body 10 having a front end and a rear end opposite to each other;
a connecting portion 30 provided for connecting the front end of the handle body 10 and a tool head 31 provided for acting an article;
a plurality of areas 100 provided on an outer periphery of the handle body 10; and
a plurality of grinding surfaces 21 each provided on one area 100 respectively and having a plurality of fine protrusions for grinding an article.

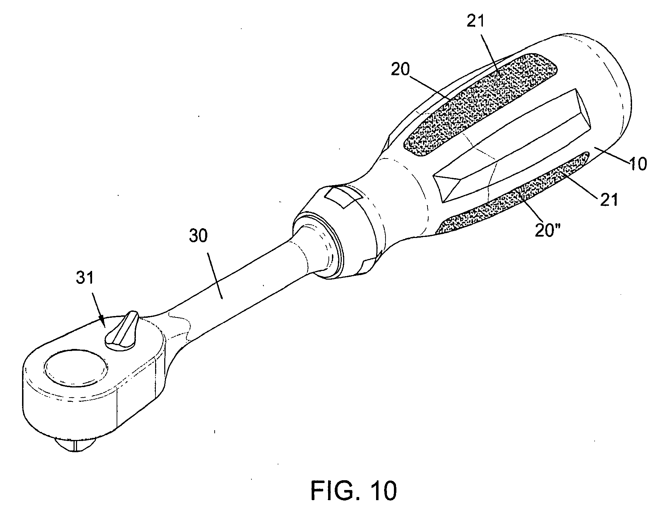

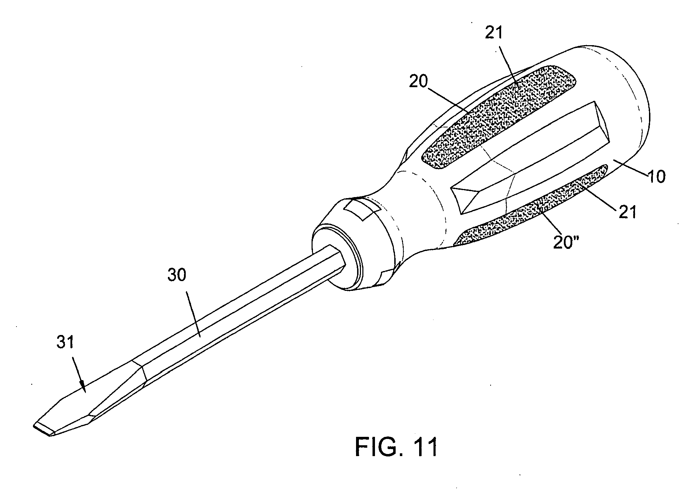

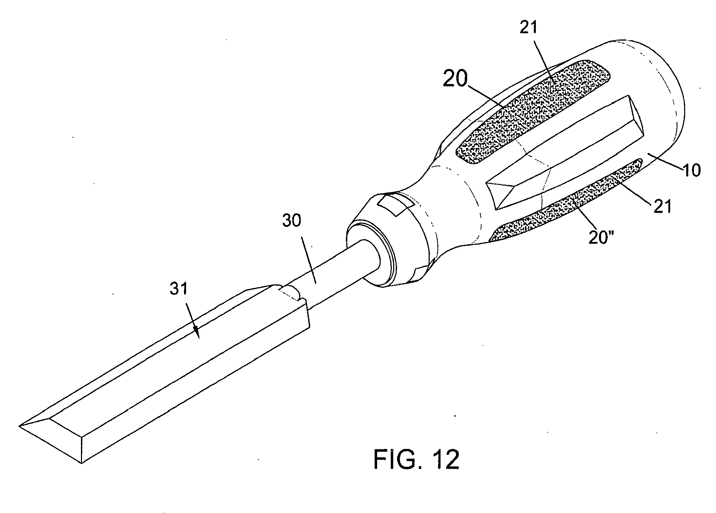

Referring to Fig. 1 and 10-12, in some embodiments, the tool head 31 may be a screw drill shown as Fig. 1, a drive head of a wrench, a drive head of a ratchet wrench having ratchet mechanism shown as Fig. 10, a chisel shown as Fig. 11, a carpenter knife, or a rasp shown as Fig. 12, so that the tool head 31 has a capability of driving, cutting or rasping the article, and the article is a screw, a nut, a bolt, a socket, or a wood workpiece.

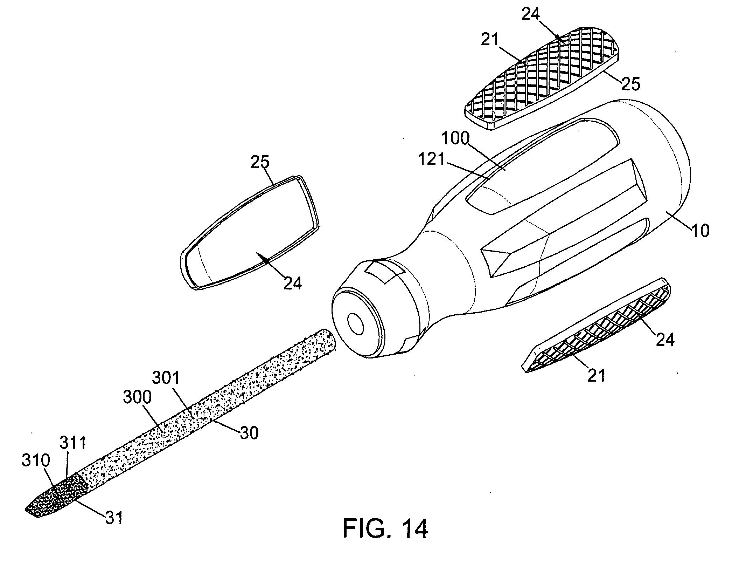

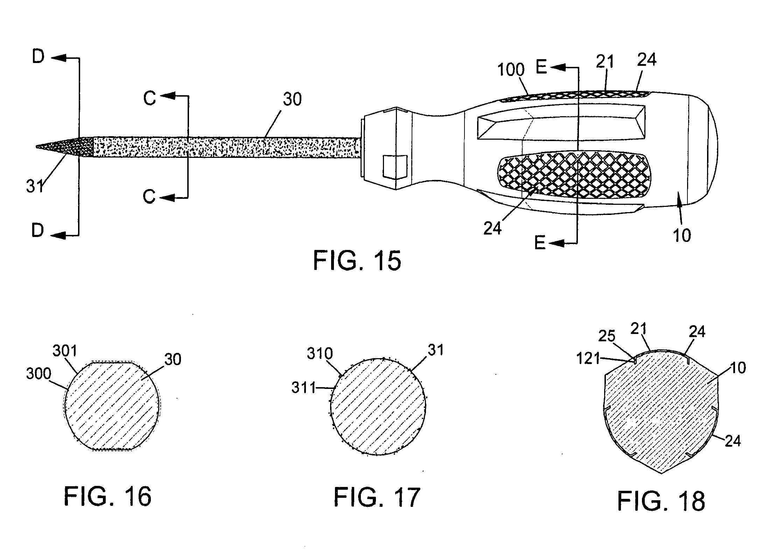

Referring to Fig. 14-17, in one example of a tool, the plurality of fine protrusions of one grinding surface 301/311 has an average diameter so as to grind the article to have a fine degree, and the average diameter of the plurality of fine protrusions of each grinding surface 301/311 is different from the other.

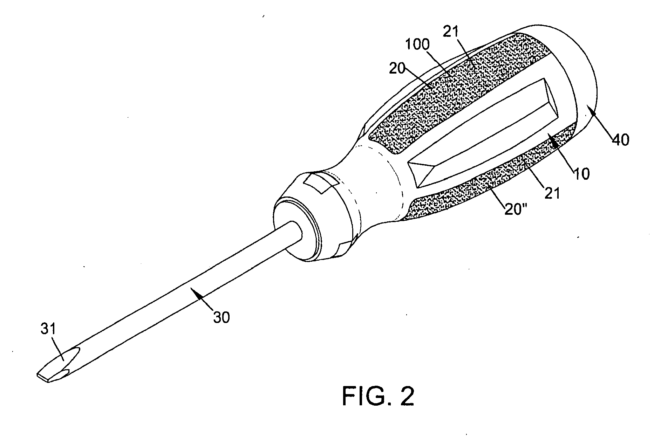

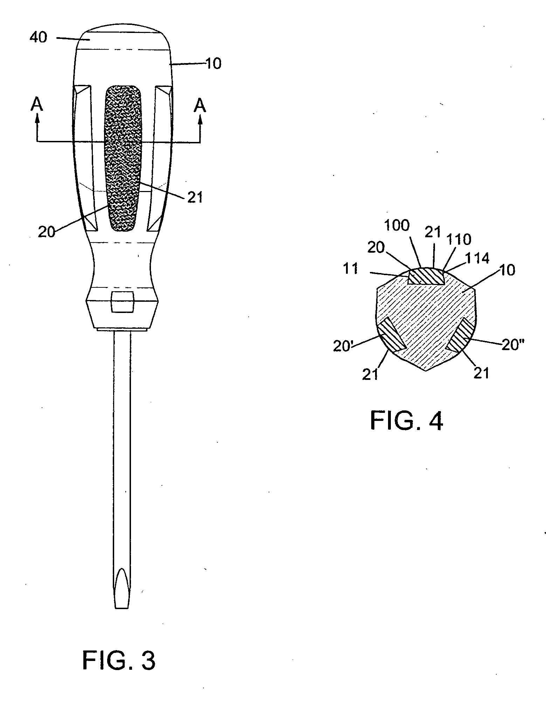

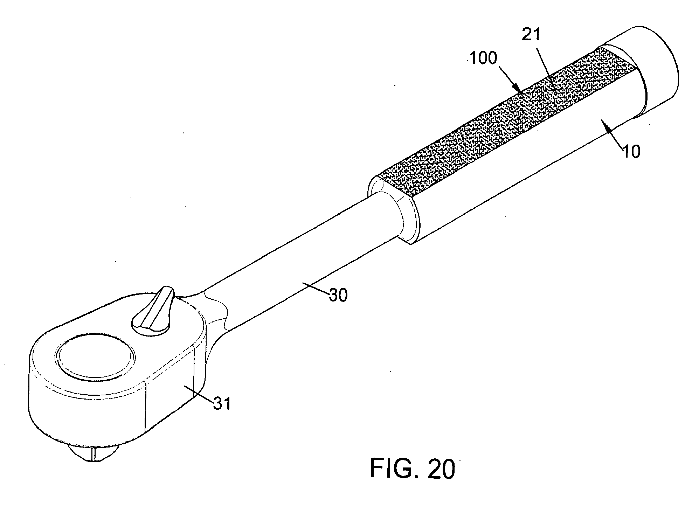

Referring to Fig. 14-17 and 20, in one example of a tool, the areas 100/300/310 is formed of a metal or an alloy material, and the plurality of fine protrusions of the grinding face 21/301/311 is formed by electrodepositing abrasive grains on the areas 100/300/310, and in one preferable embodiment the abrasive grains are made of carborundum having the hardness of at least 19600 MPa (N/mm²). Referring to Fig. 1-4, in a preferable embodiment of the present invention, the outer periphery of the handle body 10 includes a plurality of slots 11, the number of the grinding member 20/20'/20" is the same with the number of the slots 11, the number the figure illustrates is three, and the grinding members 20/20'/20" are provided to be mounted in the slots 11. The grinding surfaces 21 are formed on the grinding members 20/20'120", and the grinding faces 21 are positioned at the fist opening 110 when the grinding members 20/20'/20" are mounted in the slots 11. The grinding member 20/20'/20" is formed by mixing abrasive grains and a basic material, the abrasive grains are made of carborundum or Boron Nitride (CBN), and the basic material is selected from the group which consists of clay, resin and rubber, wherein the concentration of the abrasive grains of grinding member 20/20'/20" is at least 25% according to g/cm³ so as to have an effective grinding capability, and a preferable concentration is at least 50% according to g/cm³. Further, the abrasive grains of one grinding member 20/20'/20" has an average diameter so as to grind an article to have a fine degree, the average diameter of the abrasive grains of each grinding member 20/20'/20" is different from the other. In a more preferable embodiment, the average diameter of the abrasive grains of one grinding member 20/20'/20" is at least two times of the other so as to match with a popular use. In the embodiment, if the number of grinding member 20/20'/20" is three, the average diameter of the abrasive grains of one grinding member 20 is two times of the average diameter of the abrasive grains of the second grinding member 20' and four times of the average diameter of the abrasive grains of the third grinding member 20".

Referring to Fig. 1-4, in a preferable embodiment of the present invention, the width of the slot 11 gradually reduces from a bottom of the slot 11 to the first opening 110, and the grinding member 20/20'/20" is limited by a fringe 114 of the first opening 110 when the grinding member 20/20'/20" is mounted in the slot 11 wherein a first end of the slot 11 directing to the front end of the body 10 is closed, a second end of the slot 11 directing to the rear end of the body 10 includes a second opening 111, the grinding member 20/20'/20" is inserted from the second opening 111 to be mounted in the slot 11, and the rear end of the body 10 is connected to a cover 40 to close the second opening 111. In a further embodiment, the rear end of the body 10 is provided with a threaded hole 13 thereon, the cover includes a threaded rod 41, and the threaded rod 41 is threaded into the threaded hole 13 so that the cover is fixed on the body 10 and closes the second opening 111.

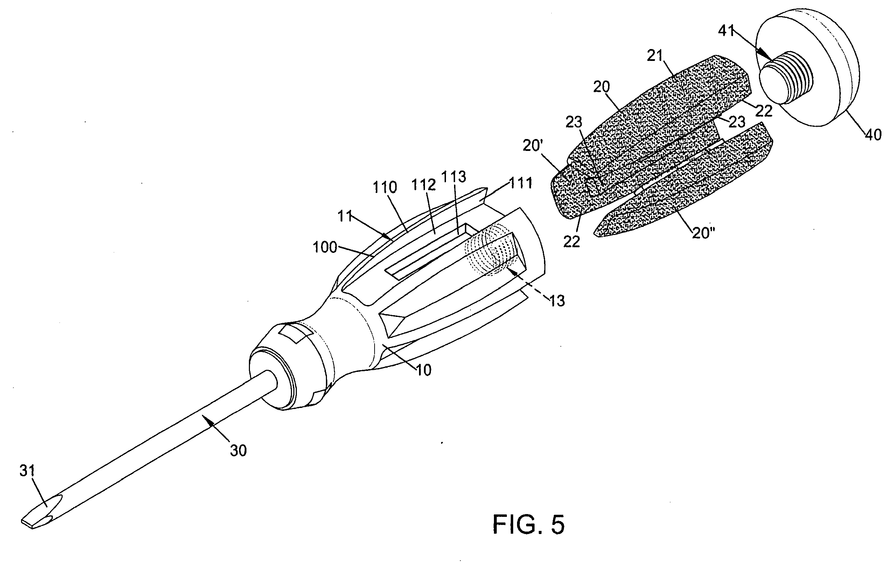

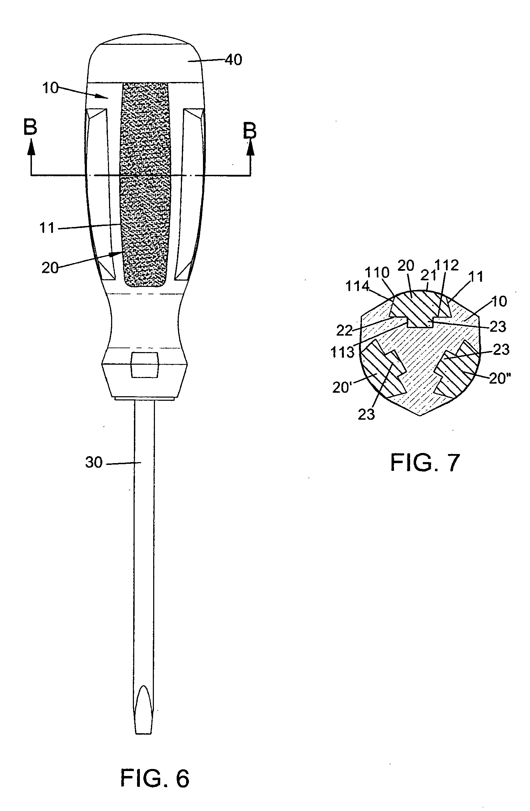

Referring to Fig. 5-7, in a preferable embodiment of the present invention, a first surface 112 of the slot 11 opposite to the first opening 110 includes a cavity 113, a second surface 22 of the grinding member 20/20'/20" opposite to the grinding face 21 includes a protruding block 23 for mounting in the cavity 113, the grinding member 20/20'/20" can be exactly fixed on the body 10 so as to avoid the grinding member 20/20'/20" easily released from the body 10 when bearing a bigger longitudinal force.

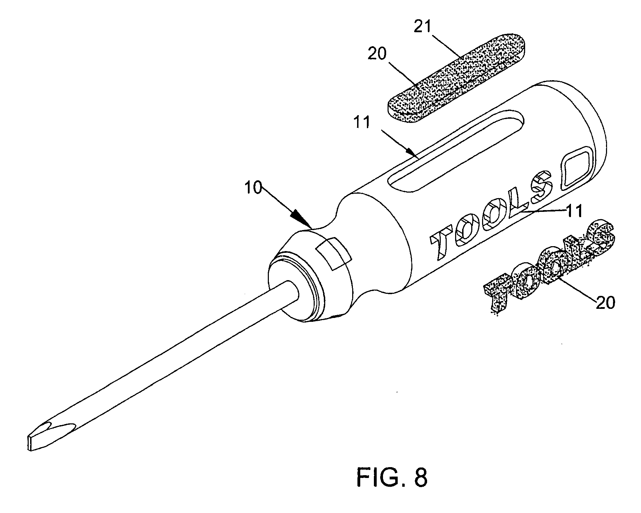

Referring to Fig. 8, in a preferable embodiment of the present invention, the shape of grinding member 20 can be formed to be a figure or words of a brand name, also the shape of slot 11 is formed to be the same shape so as to mount with the grinding member 20.

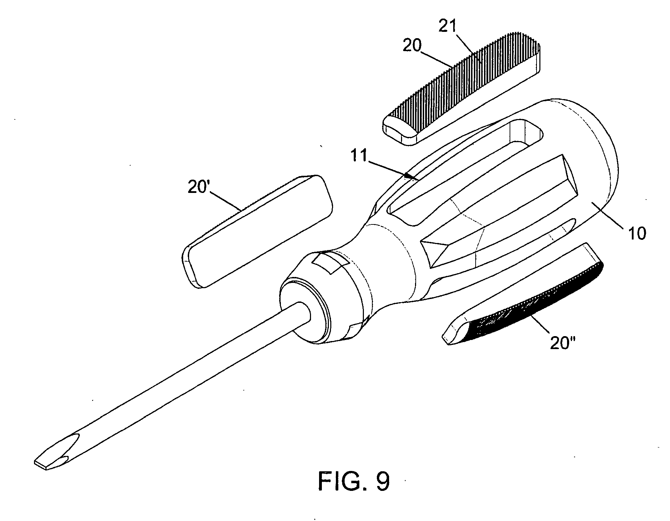

Referring to Fig. 9, in an example of a tool, the grinding surfaces 21 is formed on the grinding members 20 and made by a high-carbon steel material having a hardness at least 10.0 Rockwell C, and the plurality of fine protrusions of the grinding surface 21 is integrally formed on the grinding members 20, the grinding members 20 are mounted in the slots 11. Referring to Fig. 14, 15 and 18, in one embodiment, the areas 100 are provided on the handle body 10, each area 100 on the outer periphery of the handle body 10 defines an annular sunken slot 12 thereon, each grinding surface 21 is defined on a plate 24 made by a high-carbon steel, and the plate 24 has an annular protrusion 25 mounted in the annular sunken slot 12.

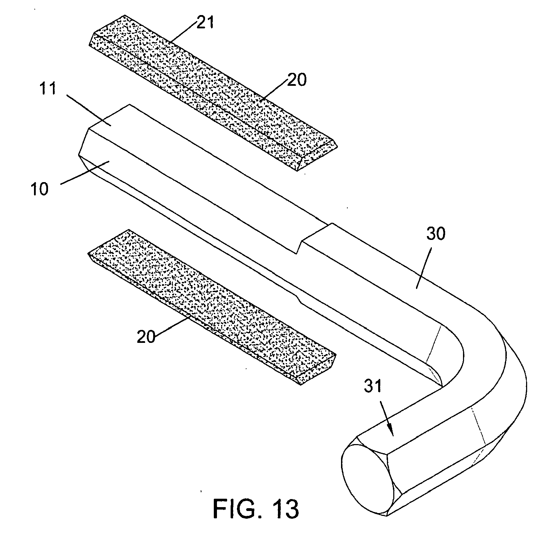

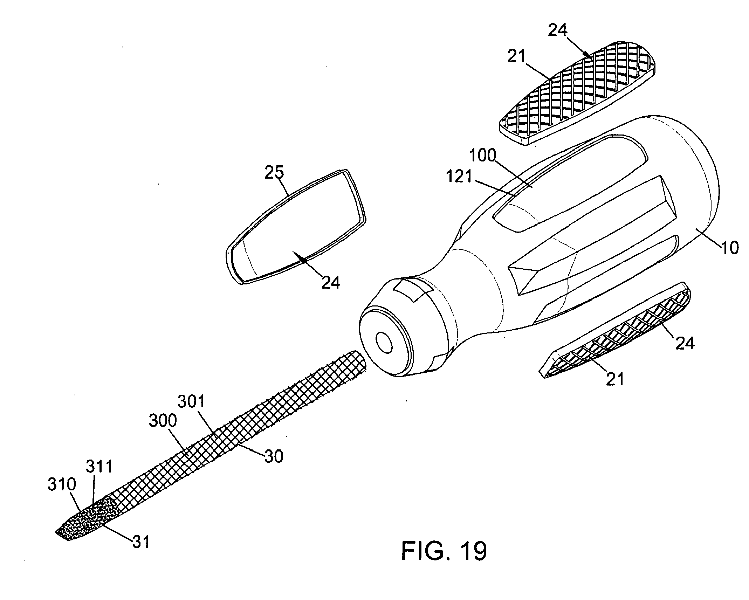

Referring to Fig. 9 and 13-20 it is to mention that these tools do not fall within the scope of protection.

The advantages of the present invention are as following :
1. The first advantage of the present invention is that the user can grind the articles straightly by the handle, connecting portion or tool head when he works and finds out the edge of the articles are sharp as to harm human body or the article is not easily driven.
2. The second advantage of the present invention is that the user can easily replace a new grinding member when the old one is out of use.
3. The third advantage of the present invention is that the handle is embedded with a plurality of grinding member, each grinding member has an average diameter being different from the other, so that each grinding member can be used to grind the article to have different fine degree.
4. The fourth advantage of the present invention is that the handle does not have the grinding capability only but also has the advertisement function when designing the grinding member to be a figure or words of a brand name.
5. The fifth advantage of the present invention is that the grinding member can be exactly fixed on the body so as to avoid the grinding member easily releasing from the body when bearing a bigger longitudinal force.

While we have shown and described the embodiment in accordance with the present invention, it should be clear to those skilled in the art that further embodiments may be made without departing from the scope of the present invention, as defined in the claims.

## Claims

1. A hand tool having grinding capabilities comprising:
a handle body (10) provided for a user's hand holding having opposed a front end and a rear end;
a connecting portion (30) provided for connecting the front end of the handle body and a tool head provided for acting an article;
a plurality of areas provided on an outer periphery of the handle body; and
a plurality of grinding surfaces (21) each provided on one area respectively and having a plurality of fine protrusions for grinding an article;
**characterized in that**
each area defines a sunken slot (11) thereon having a first opening (110) facing in a radial direction, each grinding surface defined on a grinding member (20) mounted in one sunken slot respectively, each grinding member containing abrasive grains uniformly to form the plurality of fine protrusions, and the concentration of the abrasive grains of the grinding member being at least 25% in terms of specific weight of the grinding member.

2. The hand tool as claimed in claim 1, wherein a bottom of the sunken slot (11) opposite to the first opening defines a cavity thereon, and a second surface of the grinding member opposite to the grinding surface defines a protruding block therefrom for mounting in the cavity.

3. The hand tool as claimed in claim 1, wherein the width of the slot (11) gradually reduces from a bottom of the slot to the first opening, a first end of the slot is closed, a second end of the slot defines a second opening thereon, the grinding member is inserted from the second opening to be mounted in the slot, the handle body is connected with a cover to close the second opening, and the grinding member is limited by the cover and a fringe of the first opening.

4. The hand tool as claimed in claim 1, wherein the grinding member (20) is formed to be a figure or words of a brand name, and the slot is formed to be the same shape with the grinding member.

5. The hand tool as claimed in claim 1, wherein the plurality of fine protrusions of one grinding member has an average diameter, and the average diameter of the plurality of fine protrusions of another grinding member is different from the other.

## Patentansprüche

1. Ein Handwerkszeug mit Schleifmöglichkeiten, das umfasst:
einen Griffkörper (10), der zum Halten für die Hand eines Benutzers vorgesehen ist und der gegenüberliegend ein vorderes Ende und ein hinteres Ende umfasst,
einen Verbindungsbereich (30), der vorgesehen ist, um das vordere Ende des Griffkörpers und einen für die Betätigung von Gegenständen vorgesehenen Werkzeugkopf zu verbinden,
eine Vielzahl von Bereichen, die am äußeren Umfang des Griffskörpers vorgesehen sind, und
eine Vielzahl von Schleifflächen (21), wovon jede entsprechend in einem Bereich vorgesehen ist und eine Vielzahl von feinen Vorsprüngen zum Schleifen eines Gegenstandes umfasst,
**dadurch gekennzeichnet, dass**
an jedem Bereich ein vertiefter Schlitz (11) ausgebildet ist, der eine erste Öffnung (110) umfasst, die in eine radiale Richtung weist, wobei jede Schleiffläche an einem Schleifelement (20) ausgebildet ist, das jeweils in einem vertieften Schlitz befestigt ist, wobei jedes Schleifelement gleichmäßig Schleifkörner beinhaltet, um die Vielzahl an feinen Vorsprüngen auszubilden, und die Konzentration an Schleifkörnern der Schleifelemente beträgt wenigstens 25 % in Bezug auf das spezifische Gewicht des jeweiligen Schleifelements.

2. Handwerkzeug nach Anspruch 1, wobei ein Boden des vertieften Schlitzes (11) gegenüber der ersten Öffnung eine Ausnehmung definiert und wobei eine zweite Fläche des Schleifelements gegenüber der Schleiffläche für das Befestigen in der Ausnehmung einen hervorstehenden Block definiert.

3. Handwerkzeug nach Anspruch 1, wobei die Breite des Schlitzes (11) sich allmählich von dem Boden des Schlitzes zu der ersten Öffnung hin verringert, wobei ein erstes Ende des Schlitzes geschlossen ist, wobei an einem zweiten Ende des Schlitzes eine zweite Öffnung ausgebildet ist, wobei das Schleifelement von der zweiten Öffnung her eingeführt wird, um in dem Schlitz befestigt zu werden, wobei der Griffkörper mit einer Abdeckung verbunden ist, um die zweite Öffnung zu verschließen, und wobei das Schleifelement durch die Abdeckung und einen Rand der ersten Öffnung begrenzt ist.

4. Handwerkzeug nach Anspruch 1, wobei das Schleifelement (20) als eine Figur oder Worte eines Markennamens ausgebildet ist und wobei der Schlitz mit derselben Form wie das Schleifelement ausgebildet ist.

5. Handwerkzeug nach Anspruch 1, wobei die Vielzahl an feinen Vorsprüngen eines Schleifelements einen durchschnittlichen Durchmesser aufweisen und wobei der durchschnittliche Durchmesser der Vielzahl an feinen Vorsprüngen eines Schleifelements verschiedenen von dem anderer Schleifelemente ist.

## Revendications

1. Outil à main ayant des capacités de meulage comprenant :
un corps de poignée (10), prévu pour être tenu par la main d'un utilisateur, ayant une extrémité antérieure et une extrémité postérieure opposées ;
une portion de liaison (30) prévue pour relier l'extrémité antérieure du corps de poignée et une tête d'outil prévue pour agir sur un article ;
une pluralité de zones prévues sur une périphérie extérieure du corps de poignée et
une pluralité de surfaces de meulage (21), chacune prévue sur respectivement une zone et ayant une pluralité de fines saillies pour meuler un article,
**caractérisé en ce**
**que** chaque zone définit une fente enfoncée (11) dans celle-ci ayant une première ouverture (110) donnant dans un sens radial, chaque surface de meulage définie sur un élément de meulage (20) étant montée respectivement dans une fente enfoncée, chaque élément de meulage contenant des grains abrasifs uniformément pour former la pluralité de fines saillies et la concentration des grains abrasifs de l'élément de meulage étant d'au moins 25% en termes de poids spécifique de l'élément de meulage.

2. Outil à main selon la revendication 1 dans lequel un fond de la fente enfoncée (11) en face de la première ouverture définit une cavité dans celui-ci et une seconde surface de l'élément de meulage en face de la surface de meulage définit un bloc en saillie de celui-ci pour le montage dans la cavité.

3. Outil à main selon la revendication 1 dans lequel la largeur de la fente (11) diminue graduellement d'un fond de la fente vers la première ouverture, une première extrémité de la fente est fermée, une seconde extrémité de la fente définit une seconde ouverture sur celle-ci, l'élément de meulage est inséré à partir de la seconde ouverture pour être monté dans la fente, le corps de poignée est relié à un recouvrement pour fermer la seconde ouverture et l'élément de meulage est délimité par le recouvrement et une bordure de la première ouverture.

4. Outil à main selon la revendication 1 dans lequel l'élément de meulage (20) est formé pour être un chiffre ou des mots d'un nom de marque et la fente est formée pour avoir la même forme que l'élément de meulage.

5. Outil à main selon la revendication 1 dans lequel la pluralité de fines saillies d'un élément de meulage a un diamètre moyen et le diamètre moyen de la pluralité de fines saillies d'un autre élément de meulage est différent de l'autre.
